Europäisches Patentamt

(19) European Patent Office

Office européen des brevets

(11) Veröffentlichungsnummer: **0 010 698**
**B1**

(12) **EUROPÄISCHE PATENTSCHRIFT**

(45) Veröffentlichungstag der Patentschrift:
27.04.83

(21) Anmeldenummer: **79104038.9**

(22) Anmeldetag: **18.10.79**

(51) Int. Cl.³: **F 16 C 23/04**

(54) **Halterung für Kalottenlager.**

(30) Priorität: **30.10.78 DE 2847099**

(43) Veröffentlichungstag der Anmeldung:
**14.05.80 Patentblatt 80/10**

(45) Bekanntmachung des Hinweises auf die Patenterteilung:
**27.04.83 Patentblatt 83/17**

(84) Benannte Vertragsstaaten:
**DE FR GB**

(56) Entgegenhaltungen:
**CH-A-399 089**
**DE-A-2 549 344**
**DE-B-1 225 920**
**DE-C-965 096**
**DE-U-6 928 085**
**US-A-1 198 559**
**US-A-3 073 654**
**US-A-3 687 509**

**SIMRIT – Katalog Nr. 400, «Werkstoffbeschreibungen»,
März 1975, Carl Freudenberg, Weinheim**

(73) Patentinhaber: **SIEMENS AKTIENGESELLSCHAFT,
Berlin und München Wittelsbacherplatz 2,
D-8000 München 2 (DE)**

(72) Erfinder: **Stüwe, Botho, Sudetenstrasse 18, D-8510 Fürth
(DE)**
Erfinder: **Vobel, Wilhelm, Schlesierstrasse 6,
D-8510 Fürth (DE)**

## Halterung für Kalottenlager

Die Erfindung betrifft eine Halterung für Kalottenlager mit einem Lagertragelement und einem zwischen dem Kalottenlager und dem Lagertragelement angeordneten elastischen Ring.

Kalottenlager dienen, ebenso wie entsprechende andere Lager, zur Lagerung von Wellen, insbesondere bei Motoren und Getrieben. Im Gegensatz zu anderen Lagern, wie zylindrische Lager, die – durch Pressen, Kleben oder Bördeln – starr in ein Lagertragelement, wie Gehäusebohrungen, eingebaut werden, sind die Kalottenlager in der Halterung beweglich und können sich somit der Lage der Welle anpassen. Dazu wird das Gehäuse zur Aufnahme der Kalotte sphärisch oder konisch ausgestaltet, wobei dann das Lager mit einer Kugelhälfte in der Gehäusevertiefung liegt. Durch ein Federelement, eine sogenannte Klemmbrille, wird das Kalottenlager in seiner Position gehalten. Die Befestigung der Klemmbrille am Gehäuse kann durch Vernieten oder Bördeln erfolgen, die Klemmbrille kann jedoch auch durch Schrauben oder mit einem Sicherungsring befestigt werden.

Die Klemmbrille, die auf der vom Gehäuse abgewandten Seite des Kalottenlagers federnd und kraftschlüssig aufliegt, hat neben der axialen Fixierung des Lagers die Aufgabe, ein Mitdrehen des Lagers bei angetriebener Welle – durch den kraftschlüssigen Kontakt mit dem Lager – zu verhindern. Gleichzeitig muss jedoch die Drehmöglichkeit des Lagers bei der fluchtenden Einstellung zur Achse erhalten bleiben. Dabei darf aber die Kraft für die parallele Einstellung der Lagerbohrung zur Welle – wegen der dann auftretenden schädlichen Kantenkräfte zwischen Welle und Lager – einen bestimmten Wert nicht übersteigen. Die Einstellbarkeit und damit die Funktion von Kalottenlagern hängt also sehr wesentlich von der auf die Kalotte ausgeübten Kraft ab, die das lose in der Aufnahmebohrung von Geräten, wie Motoren und Pumpen, liegende Lager axial und gegen Mitdrehen sowie – bei Elektromotoren – gegen Geräuschentwicklung mit Hilfe der Klemmbrille sichert. In der Praxis ist die Einstellung der Grösse dieser Kraft nur durch Einhalten enger Toleranzen am Federelement, an der Lageraussenkontur und an der Aufnahmebohrung möglich. Darüber hinaus muss die Lagereinstellkraft bzw. das Lagereinstellmoment nach der Montage laufend überprüft werden. Ferner ist bei den bekannten Halterungen für Kalottenlager – für ein geringes Lagereinstellmoment – an der Kalotte und an der Aufnahmebohrung eine Oberfläche mit geringer Rauhtiefe erforderlich, d.h. eine glatte Oberfläche. Die vorstehend aufgezeigte Doppelfunktion der Klemmbrillen erfordert demnach eine genaue Abstimmung und Einstellung der Federvorspannung, wozu eine hochpräzise Klemmbrille sowie genaue Gehäuse- bzw. Lagerabmessungen und Oberflächen geringer Rauhtiefe erforderlich sind.

Aus der De-A-2 549 344 ist ein Lager für eine Welle mit einem auf der Welle aufsitzenden Lagerkörper mit konvexer Aussenfläche, die sich an einem Lagersitz anlegt, bekannt; der Lagersitz ist dabei an seiner Lagerfläche entsprechend dem Profil der Aussenfläche des Lagerkörpers oder in einem grösseren Radius profiliert. Bei diesem Lager ist der Lagerkörper über einen am Lagersitz gehaltenen elastischen Haltering in axialer Richtung der Welle festgelegt, wobei der Haltering in eine Ringnut an der Lagerfläche des Lagersitzes (Lagertragelement) federnd eingesetzt ist, über die Ringnut in Richtung zur Welle vorsteht und sich mit seinem vorstehenden Teil an eine Ringschulter an der Stirnseite des Lagerkörpers (Kalottenlager) anlegt. Der Haltering, der ausschliesslich zur Fixierung des Lagers in axialer Richtung dient, ist im allgemeinen ein O-Ring. Das Ringmaterial muss elastisch verformbar sein; weitere Angaben zum Material werden nicht gemacht.

Aus der CH-A-399 089 ist ein selbsteinstellendes Wellenlager bekannt, das in einer zylindrischen Bohrung eines Gehäuses untergebracht ist. Dieses Wellenlager weist eine einteilige, aussen ballige Lagerschale auf, die mit Hilfe zweier Ringe aus gummielastischem Material und mindestens einer Abdeckplatte, welche in die Achsrichtung senkrecht kreuzende, im Gehäuse angeordnete Nuten einschiebbar ist, zentrisch, selbsteinstellbar und elastisch gehalten wird.

Bei einer aus der DE-C-965 096 bekannten Halterung für Kalottenlager durch in der Querrichtung des Lagers elastische Zwischenglieder ist der kalottenförmige Lagerkörper durch zwei in an sich bekannter Weise beispielsweise aus schraubenförmig gewundenem Stahldraht bestehende Ringe gelagert, die sich auf der einen Seite gegen eine zylindrische Bohrung und auf der anderen Seite gegen Scheiben abstützen, welche die Bohrung in bekannter Weise an beiden Enden abdecken. Die in der Querrichtung elastischen Ringe können in einer zylindrischen Hülse angeordnet sein, wobei in diese Hülse – neben dem Lagerkörper – zwei ringförmige Filzkörper eingesetzt werden können, welche das von Spritzringen abgespritzte Öl auffangen und wieder dem Lagerkörper zuführen.

Aufgabe der Erfindung ist es, eine Halterung für Kalottenlager der eingangs genannten Art mit einem elastischen Ring zwischen Kalottenlager und Lagertragelement so auszugestalten, dass in einfacher Weise eine automatische und formschlüssige Verdrehsicherung des Kalottenlagers in seinem Tragelement geschaffen wird.

Dies wird erfindungsgemäss dadurch erreicht, dass der Ring aus einem Elastomeren oder aus Filz besteht und dass das Lagertragelement und das Kalottenlager auf der dem Ring zugewandten Seite mit Radialnuten versehen sind.

Elastomere ist eine Sammelbezeichnung für synthetische und natürliche Polymere mit gummielastischem Verhalten (vgl. beispielsweise: O.A. Neumüller «Römpps Chemie-Lexikon», 7. Auflage, Franckh'sche Verlagshandlung Stuttgart, 1973, Seite 971). Unter Filz wird, wie allgemein üblich, ein faseriges Textilerzeugnis mit regelloser Anordnung der Fasern (Natur- oder Chemiefasern) verstanden.

Die erfindungsgemässe Halterung für Kalottenlager zeichnet sich durch eine Reihe von Vorteilen aus:

- Erfordernis enger Toleranzen des die Haltekraft bewirkenden Bauteils entfällt, womit gleichzeitig dessen Herstellung erleichtert wird;
- Montageerleichterung sowie Ermöglichung des Einsatzes von Kalottenlagern in schwer oder unzugänglichen Räumen, wie Spaltrohren;
- Verringerung der Lagereinstellkräfte;
- Entfallen der Prüfung der Lagereinstellkräfte;
- Ausschaltung bzw. wesentliche Verringerung der Reibung zwischen Lager und den das Lager tragenden und fixierenden Bauteilen;
- Möglichkeit der Anwendung sowohl bei Kohle- und Kunststoffkalottenlagern als auch bei ölgetränkten Sinterkalottenlagern.

Die erfindungsgemässe Halterung erfüllt somit nicht nur die allgemein an Halterungen für Kalottenlager gestellten Bedingungen, sondern sie ermöglicht auch eine Reduzierung des Fertigungs-, Montage- und Prüfungsaufwandes.

Bei Kalottenlagern aus Kohle oder Kunststoff finden bei der erfindungsgemässen Halterung Elastomerringe Verwendung. Bei Sinterlagern, beispielsweise aus Eisen oder Bronze, werden Ringe aus Filz eingesetzt. Hierbei ergibt sich der weitere Vorteil, dass der Filz gleichzeitig als Depot für das zur Schmierung des Sinterlagers erforderliche Öl bzw. Fett dienen kann.

Die Elastomeren eigene bleibende Verformung («compression set») erweist sich bei der Verwendung in der erfindungsgemässen Halterung für Kalottenlager als Vorteil. Der Elastomerring wird nämlich in den verbleibenden Raum zwischen Lager und Lagertragelement, insbesondere die Gehäusewand, gedrückt und passt sich der Form dieses Raumes – je nach Vorspannung – mehr oder weniger an. Der Widerstand gegen diese Verformung nimmt dabei, insbesondere unter Wärmeeinfluss, im Laufe der Zeit ab. Damit verringert sich dann aber auch jene Kraft des Lagers, die dieses der ausrichtenden Kraft der Welle entgegensetzt und die Ursache der Verkantungskräfte zwischen Lager und Welle ist.

Abgesehen davon kann aber bei der erfindungsgesmässen Halterung die Lagereinstellkraft durch eine entsprechende Wahl der Shore-Härte bzw. des spezifischen Gewichtes des Elastomermaterials ohnehin klein gehalten und entsprechend auch variiert werden. Darüber hinaus kann die Ausrichtkraft der Kalottenlager auch durch den Querschnitt und die Form des Ringes beeinflusst werden. Damit übernimmt bei der erfindungsgemässen Halterung für Kalottenlager der Elastomer- bzw. Filzring – entsprechend wie eine Klemmbrille – eine Doppelfunktion: Das elastische Verhalten gestattet eine lagerzapfenparallele Ausrichtung des Lagers, während die formschlüssige Deformation zur Verdrehsicherung dient.

Die erfindungsgemässe Halterung erweist sich auch bei der Montage als sehr vorteilhaft: Die Einzelteile müssen lediglich ineinandergesteckt werden und es sind keine zusätzlichen Arbeiten, wie Schrauben, Nieten oder Verbördeln, notwendig, wie sie Klemmbrillen erfordern. Das Entfallen von Montagearbeiten erweist sich insbesondere bei Spaltrohrmotoren mit engem Spaltrohr als vorteilhaft. Von Vorteil bei der erfindungsgemässen Halterung ist weiterhin, dass sich die Genauigkeit bei der Fertigung der Ringe lediglich in den Grenzen zu bewegen braucht, wie sie beim Ausstanzen mittels Messerschnittes gegeben sind. Darüber hinaus reicht bei dieser Halterung zur Erzeugung der für das Lagertragelement und für die Aussenkanten der Kalotte erforderlichen Oberflächengüte eine Schlichtbearbeitung aus, d.h. ein grobes Schleifen. Im Gegensatz dazu sind die bislang verwendeten Klemmbrillen, wie bereits ausgeführt, Präzisionsteile.

Bei der erfindungsgemässen Halterung für Kalottenlager sind das Lagertragelement, d.h. im allgemeinen die Gehäusewand bzw. die Aufnahmebohrung, und das Kalottenlager mit Radialnuten versehen, d.h. mit Nuten, die in bezug auf die Wellenachse radial angeordnet sind. Dabei sind die Nuten jeweils im Bereich des Elastomer- bzw. Filzringes angeordnet, d.h. beim Kalottenlager ist die eigentliche Lagerfläche glatt ausgebildet, während der an den Ring grenzende Oberflächenbereich der Kalotte die Nuten aufweist. Der Elastomer- bzw. Filzring drückt sich in die Nuten der einander gegenüberliegenden Bauteile, wodurch das Lager mit dem Tragelement formschlüssig und in einer Art beweglich verbunden ist, dass vom Tragelement bzw. vom Gehäuse ausgehende Bewegungen die Leichtgängigkeit des Lagers nicht beeinflussen, d.h. keine Verklemmungen auftreten.

Vorteilhafte Ausführungsformen der erfindungsgemässen Halterung für Kalottenlager sind Gegenstand von Unteransprüchen.

Anhand von Ausführungsbeispielen und zwei Figuren soll die Erfindung noch näher erläutert werden. Es zeigt:

Fig. 1 eine Elektrolytförderpumpe, die mit erfindungsgemässen Halterungen für Kalottenlager ausgestattet ist, und

Fig. 2 eine weitere Ausführungsform der Halterung für Kalottenlager gemäss der Erfindung.

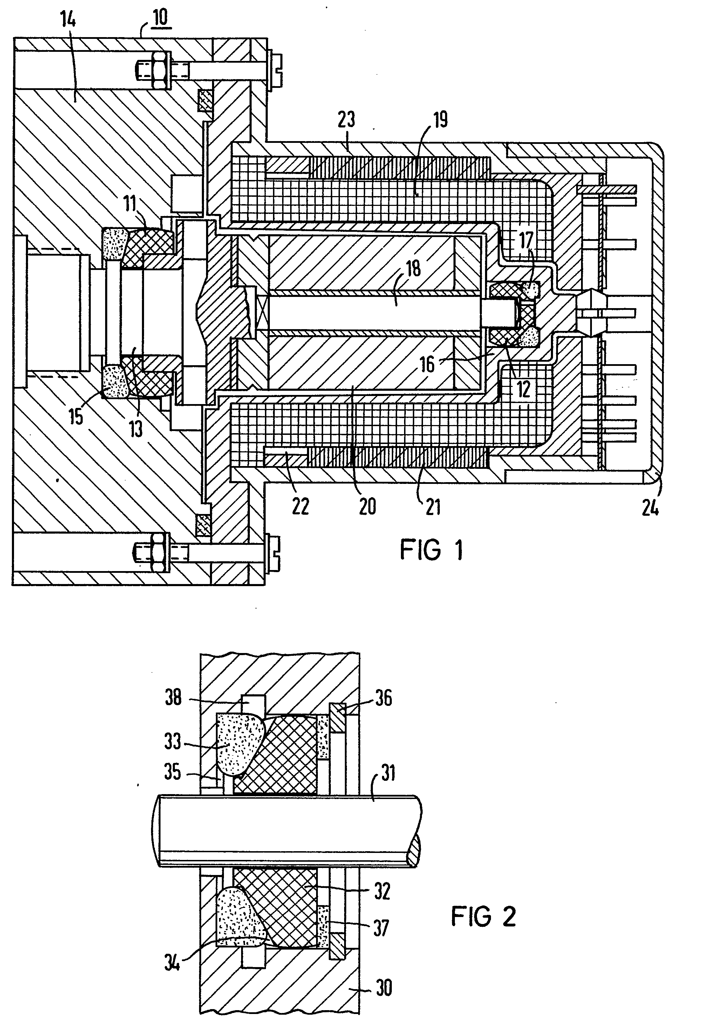

In Fig. 1 ist – im Schnitt – eine Pumpe mit Spaltrohrmotor (vgl. DE-AS 1 638 272) dargestellt, die insbesondere zur Förderung der Elektrolytflüssigkeit in elektrochemischen Zellen dient. Im vorliegenden konkreten Fall hat diese Pumpe die Aufgabe, innerhalb eines Brennstoffzellenaggregates die Elektrolytflüssigkeit, d.h. wässrige 6n KOH, bei einer Elektrolyttemperatur von ca. 80 °C umzuwälzen. Dabei wird nicht nur das Pumpenrad, sondern auch der gesamte Spaltrohrinnenraum, d.h. der elektrische Läufer und die beiden Lager, von der Kalilauge umspült. Eine derartige Konstruktion hat den Vorteil, dass eine dynamische Wellenabdichtung zwischen dem hydraulischen und dem elektrischen Teil der Pumpe entfällt, was insbesondere bei der grossen Kriechneigung der Kalilauge von Vorteil ist.

Die in Fig. 1 dargestellte Pumpe 10 weist zwei aus Kohle bestehende Kalottenspurlager 11 und 12 auf, von denen das grössere Lager 11 mit der Öffnung 13 für die Ansaugleitung der Pumpe versehen ist. Anstelle von Klemmbrillen bisher üblicher Konstruktion weist die Pumpe 10 erfindungsgemässe Halterungen für Kalottenlager auf. Dazu ist einerseits zwischen dem Pumpengehäuse 14, d.h. dem Lagertragelement, und dem Kalottenlager 11 ein Elastomerring 15 und anderseits zwischen dem Spaltrohr 16 – als entsprechendem Lagertragelement – und dem Kalottenlager 12 ein Elastomerring 17 angeordnet. Ferner sind das Kalottenlager 11 und das Gehäuse 14 sowie das Kalottenlager 12 und das Spaltrohr 16 im Bereich des Elastomerringes 15 bzw. 17 mit je vier Radialnuten versehen.

Der freie axiale Innenraum zwischen dem Spaltrohr 16 und dem Gehäuse 14 der Pumpe 10 ist so ausgelegt, dass bei montiertem Pumpenläufer 18 die Elastomerringe 15 und 17 mit Vorspannung und entsprechender Deformation zwischen dem Lager einerseits und dem Lagertragelement anderseits, d.h. Gehäuse bzw. Spaltrohr, zu liegen kommen. Beide Lager sind gegen Verdrehung gesichert und können sich – bei entsprechender Shore-Härte der Elastomerringe – mit geringen Gegenkräften achsparallel einstellen. Die beiden Lager erfahren ausserdem eine Dämpfung, wodurch insbesondere beim Einsatz in Elektromotoren die Übertragung von durch Magnetkräfte verursachten Laufgeräuschen – über den Anker auf das Lager – wirksam unterdrückt werden kann.

Die Lagereinstellkräfte werden über die Shore-Härte bzw. das spezifische Gewicht eingestellt. Dies bedeutet, dass die Elastomerringe nur so weich sind bzw. eine Shore-Härte der Art aufweisen, dass eine Formschlüssigkeit gewährleistet ist. Kleinere Ringe bestehen deshalb vorzugsweise aus einem Elastomerschaum, während grössere Ringe aus einem kompakten Elastomeren gefertigt sind. Im vorliegenden Fall bestehen die Ringe 15 und 17 aus EPDM-Schaum, d.h. aus schaumförmigem Äthylen-Propylen-Dien-Terpolymer, das laugebeständig ist. Sie werden aus sogenanntem Moosgummi hergestellt, d.h. aus mikrozellulärem Schaumstoff. Der Ring 15 weist dabei einen Innendurchmesser vom 19 mm und einen Aussendurchmesser von 27 mm auf, der Ring 17 einen Innendurchmesser von 7 mm und einen Aussendurchmesser von 11 mm; die Ringstärke beträgt jeweils 3 mm. Neben EPDM-Schaum können die Elastomerringe bei kleineren Geräten – und bei Betriebstemperaturen bis ca. 35 °C – beispielsweise auch aus Polyäthylenschäumen bestehen, bei Geräten mit höheren Leistungen und Drehmomenten werden gummielastische Materialien mit entsprechender Shore-Härte verwendet, wie EPDM-Gummi, Chloropren-Kautschuk und Nitrilkautschuk-Typen auf der Basis von Butadien-Acrylnitril-Copolymerisaten.

Bei Elektrolytförderpumpen der vorstehend erläuterten Art sind auch nach vielstündigem Temperatur-Intervallbetrieb (zwischen 20 und 80 °C) unter Betriebsbedingungen und über einen Zeitraum von ca. 1½ Jahren keine Betriebsstörungen aufgetreten, d.h. es ist weder zu einer Schwergängigkeit noch zu einer Verklemmung der Läuferwelle gekommen. Dies ist vor allem deshalb bemerkenswert, weil es bei der Betriebstemperatur von 80 °C – aufgrund von Spannungen im Spaltrohr – zu einem Auswandern des kleineren Lagers 12 in radialer Richtung zur Längsachse des Läufers 18 kommt.

Im übrigen sind bei der in Fig. 1 dargestellten Elektrolytförderpumpe noch folgende Teile näher bezeichnet: 19 ist die Wicklung des Spaltrohrmotors, eines kollektorlosen Gleichstrommotors, und 20 dessen Permanentmagnet, der unmittelbar auf dem Pumpenläufer 18 befestigt ist; mit 21 ist das Eisenblechpaket für den magnetischen Rückschluss bezeichnet und mit 22 einer von vier Hallgeneratoren zur Steuerung des Antriebsfeldes des Motors; 23 schliesslich stellt das Motorgehäuse dar und 24 eine Schutzkappe für die elektrischen Anschlüsse der Hallgeneratoren und der Motorwicklung.

In Fig. 2 ist – ebenfalls im Schnitt – eine weitere Ausführungsform der erfindungsgemässen Halterung für Kalottenlager dargestellt, und zwar eine Ausführungsform, die für Geräte mit durchgehenden Wellen geeignet ist. Zur Lagerung der das Gehäuse 30 durchdringenden Welle 31 dient das Kalottenlager 32. Zwischen Kalottenlager und der Gehäusewand ist ein Elastomer- bzw. Filzring 33 angeordnet. Ferner sind Kalottenlager 32 und Gehäuse 30 mit Nuten 34 bzw. 35 versehen. Bei dieser Ausführungsform der erfindungsgemässen Halterung ist auf der vom Elastomer- bzw. Filzring 33 abgewandten Seite des Kalottenlagers 32 ein federnder Sicherungsring 36, beispielsweise aus Bronze oder nichtrostendem Stahl, angebracht. Der Sicherungsring 36, der ins Gehäuse 30 eingesprengt ist, bewirkt – entsprechend wie bei Kalottenspurlagern die Stirnseite des Lagerzapfens – die axiale Fixierung des Lagers.

Vorteilhaft kann bei der Ausführungsform der erfindungsgemässen Halterung für Kalottenlager nach Fig. 2 zwischen dem Kalottenlager 32 und dem Sicherungsring 36 ein weiterer Elastomer- bzw. Filzring 37 angeordnet sein. Auf diese Weise kann insbesondere auch bei grösseren Lagerdurchmessern – und damit grösseren Einstellwegen der äusseren Lagerkante – die Reibung der Lagerkante am Sicherungsring vermieden werden. Ausserdem ist hierbei die Dämpfung des Lagers, insbesondere bei Elektromotoren, grösser, so dass Lagergeräusche noch sicherer vermieden werden können.

Ebenso wie die Ausführungsform der erfindungsgemässen Halterung nach Fig. 1 lässt sich auch diejenige nach Fig. 2 sowohl bei Kohle- und Kunststoffkalottenlagern als auch bei Sinterkalottenlagern verwenden. Bei letzteren werden dann anstelle von Elastomerringen Filzringe verwendet. Dabei werden zweckmässigerweise ölgetränkte Filzringe eingesetzt, so dass der Filzring neben der axialen und der Drehsicherung auch als Ölvorrat für die ölgetränkten Sinterlager dient. Vorteilhaft kann in diesem Fall im Gehäuse 30 zusätzlich noch eine als Depotkammer für das Schmiermittel dienende Ringnut 38 vorgesehen sein.

## Patentansprüche

1. Halterung für Kalottenlager (11, 12, 32) mit einem Lagertragelement (14, 16, 30) und einem zwischen dem Kalottenlager und dem Lagertragelement angeordneten elastischen Ring (15, 17, 33), dadurch gekennzeichnet, dass der Ring (15, 17, 33) aus einem Elastomeren oder aus Filz besteht und dass das Lagertragelement (14, 16, 30) und das Kalottenlager (11, 12, 32) auf der dem Ring zugewandten Seite mit Radialnuten (35, 34) versehen sind.

2. Halterung nach Anspruch 1, dadurch gekennzeichnet, dass auf der vom Elastomer- bzw. Filzring (33) abgewandten Seite des Kalottenlagers (32) ein Sicherungsring (36) angebracht ist.

3. Halterung nach Anspruch 2, dadurch gekennzeichnet, dass zwischen dem Kalottenlager (32) und dem Sicherungsring (36) ein weiterer Elastomer- oder Filzring (37) angeordnet ist.

4. Halterung nach einem der Ansprüche 1 bis 3, dadurch gekennzeichnet, dass der Ring (15, 17, 33; 37) aus einem schaumförmigen Elastomeren besteht.

5. Halterung nach Anspruch 4, dadurch gekennzeichnet, dass der Elastomerring (15, 17, 33; 37) aus EPDM-Schaum (Äthylen-Propylen-Dien-Terpolymer) besteht.

## Claims

1. A mounting for cup-shaped bearings (11, 12, 32) comprising a bearing carrier element (14, 16, 30) and an elastic ring (15, 17, 33) arranged between the cup-shaped bearing and the bearing carrier element, characterised in that the ring (15, 17, 33) consists of an elastomer or of felt; and that the bearing carrier element (14, 16, 30) and the cup-shaped bearing (11, 12, 32) are provided with radial grooves (35, 34) on the side facing the ring.

2. A mounting according to Claim 1, characterised in that a safety ring (36) is placed on the side of the cup-shaped bearing (32) which faces away from the elastomer ring or felt ring (33).

3. A mounting according to Claim 2, characterised in that between the cup-shaped bearing (32) and the safety ring (36), there is arranged a further elastomer ring or felt ring (37).

4. A mounting according to one of Claims 1 to 3, characterised in that the ring (15, 17, 33; 37) consists of a foamed elastomer.

5. A mounting according to Claim 4, characterised in that the elastomer ring (15, 17, 33; 37) consists of EPDM-foam (ethylene-propylene-diene terpolymer).

## Revendications

1. Support pour un palier à rotule (11, 12, 32) comportant un élément de support de palier (14, 16, 30) et une bague élastique (15, 17, 33) disposée entre le palier à rotule et l'élément de support de palier, caractérisé par le fait que la bague (15, 17, 33) est constituée avec un élastomère ou avec un feutre et que l'élément de support de palier (14, 16, 30) et le palier à rotule (11, 12, 32) sont pourvus, du côté voisin de la bague, de gorges radiales (35, 34).

2. Support selon la revendication 1, caractérisé par le fait qu'une bague de sécurité (36) est montée sur le côté du palier à rotule (32), éloigné de la bague (33) en élastomère ou en feutre.

3. Support selon la revendication 2, caractérisé par le fait qu'entre le palier à rotule (32) et la bague de sécurité (36) est prévue une seconde bague (37) en élastomère ou en feutre.

4. Support selon l'une des revendications 1 à 3, caractérisé par le fait que la bague (15, 17, 33; 37) est faite avec un élastomère en forme de mousse.

5. Support selon la revendication 4, caractérisé par le fait que la bague en élastomère (15, 17, 33; 37) est faite avec un terpolymère d'éthylène, de propylène et de diène.

0 010 698

FIG 1

FIG 2

7